# EUROPEAN PATENT APPLICATION

(11) **EP 4 810 636 A1**
(43) Date of publication of application: **23.09.2026**
(21) Application number: 25164897.8
(22) Date of filing: 19.03.2025
(51) Int. Cl.: C22C 30/00, C22C 38/00, C22F 3/00, C25B 1/04, C25B 11/091, H01M 4/90

(54) **ELECTROCATALYSTS AND METHODS FOR PREPARATION THEREOF**

(71) Applicant: Kemijski Institut, 1001 Ljubljana (SI)
(72) Inventor: Suhadolnik, Luka, 1001 Ljubljana (SI); Bele, Marjan, 1001 Ljubljana (SI); Hodnik, Nejc, 1001 Ljubljana (SI)
(74) Representative: Patentni Biro AF d.o.o.

(57) **Abstract**

The present invention relates to electrocatalysts and methods for preparation thereof. The method for preparation of electrocatalysts, wherein the method comprises laser treatment of starting materials selected in the group comprising medium entropy alloys, high entropy alloys including but not limited to Cantor alloys, particularly high entropy alloys comprising transition metals, nickel, nickel-comprising alloys, steel, nickel-comprising steel, and similar materials, resulting in an immobilized nanostructured layer with thickness of at least 2µm and with specific high-surface-area morphology, wherein any laser with a wavelength between 1000 and 1100 nm and the following laser parameters is used:
- relative applied power to the treated surface is selected in the range from 5 W to 100 W,
- laser frequency is selected in the range from 500 Hz to 120 kHz,
- scan speed is selected in the range from 10 mm/s to 3000 mm/s,
- laser beam diameter below 100 µm, and
- line spacing is selected in the range from 0.001 mm to 0.1 mm.

## Description

### Field of the invention

The present invention relates to electrocatalysts and methods for preparation thereof, which includes the modification of starting materials, such as metals and alloys, based on the laser treatment, which results in the modification of surface morphology and composition.

### Background of the invention and the technical problem

An electrocatalyst is a catalyst that participates in electrochemical reactions. These reactions occur at the surface of the electrocatalyst, where electron transfer between the electrode and reactants takes place, or where intermediate chemical transformations facilitate the overall half-reaction. Electrocatalytic materials modify and enhance the rate of electrochemical reactions by interacting with reagents to alter reaction pathways and lower the activation barrier, while remaining unconsumed in the process. In electrochemical reactions, the reaction rate depends not only on temperature, pressure, solution medium, and the state of the solid surface, but also on the electric field at the electrode/solution interface, which plays a key role in electrochemical processes. Additionally, the reaction rate depends on the structure of the electrical double layer at the electrode. Thus, the electrochemical reaction rate can be controlled by modifying electrocatalysts at the electrode surface.

Existing synthetic procedures for immobilized nanostructured films on conductive substrates, such as chemical vapor deposition (CVD), solvothermal synthesis, and dip coating, suffer from significant drawbacks. These include complexity, high cost, slow processing times, and poor adhesion of the resulting films to the substrate, often compounded by a combination of these limitations. Furthermore, these methods do not provide a straightforward, single-step approach for producing high-surface-area immobilized films in an ultra-fast and scalable manner.

The technical problem addressed by the present invention is the development of a fast process for the preparation of high-surface-area immobilized nanostructured films directly on metal or alloy surfaces. It is an aim of the invention to provide a simple, scalable, and reliable method.

### Prior art

Lasers have been shown to cause modification of materials, including the potential to alter surface properties, morphology, chemical composition and mechanical performance. For example, laser cladding, where a high-power laser melts a coating material and a thin layer of the substrate to create a metallurgically bonded clad layer, enhancing wear and corrosion resistance. Laser metal deposition uses a laser-induced melt pool to build structures layer by layer from powdered or wire material. Laser remelting, which reheats and melts the surface layer, is used to refine microstructures, improving hardness and corrosion resistance. Laser surface alloying involves melting the substrate surface with a laser while introducing alloying elements, creating a new alloyed surface layer. Meanwhile, laser surface texturing employs laser interference or direct writing to create micro- or nano-scale patterns that alter surface properties such as wettability and friction.

Tang et al. (Journal of Materials Engineering and Performance, 2016, 25, 4115-4125; doi:10.1007/s11665-016-2251-9) investigated the fabrication of surface roughness structures on AA7075 aluminum alloy using laser marking technology to improve tribological properties. They used commercially available AA7075 aluminum alloy plates (6 mm thickness) with a chemical composition of 0.4% Si, 1.2% Cu, 0.3% Mn, 2.1% Mg, 0.20% Cr, 5.1% Zn, and balance Al. The YAG laser used in the study had a wavelength of 1064 nm, a pulse width of 20 ns, a beam diameter of 80 µm, and an output power of 20 W - the same conditions later reported in Tang et al. (Materials 2018, 11, 2297; doi:10.3390/ma11112297). The 2016 study systematically examined the effects of different laser processing parameters on surface roughness and microstructure formation to enhance friction resistance and hardness. However, while both studies demonstrated controllable microstructure formation, the material itself (AA7075 aluminum alloy) is entirely different from the present invention and is not suitable for electrocatalytic applications. Additionally, neither study achieved the nanostructured morphology required for electrocatalysts, as the surface modifications were primarily designed to improve mechanical properties rather than electrochemical activity. Moreover, the relative power applied to the aluminum alloy plates was not disclosed, and no electrochemical evaluation was performed, further confirming that the approach is unsuitable for achieving the desired high-surface-area nanostructures necessary for electrocatalysis.

Haubrich et al. (available at https://core.ac.uk/download/pdf/31013268.pdf) examined laser treatments of titanium TiAl3V2.5 surfaces in different atmospheres to enhance adhesion properties to polyetheretherketone (PEEK), employing laser treatment as a pretreatment. A pulsed Nd:YAG laser was used in air, oxygen, nitrogen and argon atmospheres. SEM investigations showed macro-structuring at the micron scale and superimposed fine nanostructuring.

### Description of the solution to the technical problem

The invention addresses the technical problem identified above and provides electrocatalytic materials with increased specific surface area and methods for their preparation. The technical problem is solved as defined in the independent claims, while preferred embodiments are defined in the dependent claims.

The essence of the methods for preparation of electrocatalysts is that specific starting materials selected in the group comprising medium entropy alloys, high entropy alloys including but not limited to Cantor alloys, particularly high entropy alloys comprising transition metals, nickel, nickel-comprising alloys, steel, nickel-comprising steel, and similar materials, are treated with a laser with parameters defined below that due to the high energy vaporizes the metal on the surface, which is then deposited on the same surface. This results in creation of an immobilized nanostructured layer with specific high-surface-area morphology and different chemical composition that depends on the starting metal or alloy composition and atmosphere during laser treatment.

The method according to the invention consists of a single step, involving the laser modification of the starting material under conditions that result in a uniform morphology, which is consistent across the entire surface of the material. With the methods according to the invention the modification affects a surface layer with a thickness of at least 0.5 µm, usually from approximately 1 µm to 40 µm, most commonly approximately 10 µm. The change in material surface morphology serves as the primary descriptor, wherein the treated surfaces are characterized by nanostructured particles smaller than 5 nm, which are interconnected into rounded and elongated shapes at the micro-scale.

Any laser with a wavelength between 1000 and 1100 nm, preferably a fiber laser, can be used in the methods according to the invention, wherein the laser parameters are selected within the following ranges:
- relative applied power to the treated surface is selected in the range from 5 W to 100 W, preferably from 10 W to 50 W, with an optimal range from 20 W to 30 W,
- laser power is set based on the relative applied power, hence any laser power that allows achieving the applied relative power specified above can be used, typically ranging from 10 W to 1000 W, wherein the user sets the suitable % of the power to be applied,
- laser frequency is selected in the range from 500 Hz to 80 kHz, preferably below 30 kHz,
- scan speed is selected in the range from 10 mm/s to 3000 mm/s, with an optimal range between 200 mm/s and 800 mm/s,
- pulse width between 1 and 100 ns and laser beam diameter below 100 µm, and
- line spacing is selected in the range from 0.001 mm to 0.1 mm, preferably between 0.005 mm and 0.015 mm.

Laser working distance is the distance between the laser lens and the treated surface. The laser should be positioned at the appropriate focal distance for optimal energy delivery. However, the method remains effective even with slight deviations from the ideal working distance. The skilled person is well-aware how to select suitable laser working distances.

Additionally, the method as described above can be conducted in any atmosphere, such as nitrogen, oxygen, argon, hydrogen, carbon dioxide, vacuum, or ammonia, to tailor the surface composition of the treated starting material. The laser system used to perform the method can be enclosed for greater control over the atmosphere, although the method is also effective in an open system. However, an open configuration limits the ability to achieve certain specific compositions, whereas the specific morphology - featuring these interconnected nanostructured particles forming distinct micro-scale shapes - can be reliably obtained. In different atmospheres, the exact composition of the material can be different, as, for example, in air or oxygen atmospheres the uppermost layer may be more oxidized than in other atmospheres. The selection of the atmosphere may depend on the planned use of the material.

The above-described conditions ensure that the uppermost layer of the treated starting material is at least partly vaporized, leading to surface modifications such as redeposition, nanostructuring, or other morphological changes that increase the specific surface area.

The final properties of the nanostructured film can be precisely tailored by adjusting various laser parameters, such as the type and power of the laser, its frequency, the relative power applied, the scan speed, and the line spacing. It is, however, important to remain in the ranges defined above.

If the relative power is too low or the scan speed is too high, the material does not absorb enough energy to reach the vaporization threshold, preventing the formation of the desired nanostructure. Conversely, if the relative power is too high, the material undergoes engraving, forming channels instead of a uniform modified layer. At very high relative power levels, the laser cuts through the material instead of modifying the surface. If the scan speed is too low, excessive heat accumulates, leading to overheating and an undesired surface morphology.

A very high laser frequency leads to excessive overlapping of pulses, resulting in a polishing effect rather than nanostructure formation.

If the line spacing is too small, the laser revisits the same area too frequently, leading to excessive heat accumulation, similar to the effect of a low scan speed. This can cause material melting and loss of nanostructure formation. If the line spacing is too large, certain regions remain unmodified, resulting in an inconsistent surface morphology with untreated areas.

By carefully tuning these parameters, the method ensures the controlled formation of nanostructured particles while avoiding unwanted effects such as engraving, overheating, surface smoothing, or incomplete modification. The above-mentioned article by Tang et al. used laser engraving on aluminum alloys, however only small surfaces around the engraved structures were showing nanoparticle deposits, which significantly differs from the present invention, which allows uniform and complete restructuring of the upper layer of laser-treated materials. Only such nanostructures enable the sufficient increase in surface area, which is required for electrocatalysts.

The laser apparatus used in the described invention is not restricted to a specific type or configuration. The process can be performed with various laser systems, provided that the operating conditions are adjusted accordingly to achieve the desired surface modification, characterized by the morphology of the nanostructured film. The effectiveness of the laser modification is demonstrated by the increase in electrochemically active surface area (ECSA), determined through double-layer capacitance (C_{dl}) measurements, which were performed according to the procedure described by Serapinienė et al. (2023; https://www.mdpi.com/2079-6412/13/8/1335). For starting materials treated by the method according to the invention the C_{dl} value increases at least 5-fold, which means there is a substantial increase in active surface area. Moreover, the modification is uniform across the entire laser-treated surface, ensuring consistent electrochemical properties throughout the material.

This method can be applied to various forms of metals and alloys, including sheets, wires, and meshes. The process parameters are carefully adjusted to match the specific geometry and material properties, ensuring consistent and optimal results across different forms.

The method according to the invention is an ultra-fast, one-step process that modifies the morphology and composition of metals and alloys in a highly controlled manner.

The key advantage of this novel process lies in its ability to modify the morphology and chemical composition of various metals and alloys in a simple, cost-effective manner. Crucially, it enables the efficient modification of even highly complex multi-metal materials without difficulty. The method according to the invention allows for the rapid modification of a starting material with a surface of any size, depending on the laser used. Commercial lasers come with different table sizes, offering flexibility for different materials, surface areas, and shapes. However, if larger surfaces need to be treated, a portable laser mounted on a robot or robotic arm can be used to extend the modification to a greater area.

In a second aspect, the present invention relates to electrocatalysts prepared with the method as described above. The electrocatalysts are prepared from a starting material selected in the group comprising medium entropy alloys, high entropy alloys including but not limited to Cantor alloys, particularly high entropy alloys comprising transition metals, Nickel, Nickel-comprising alloys, steel, Nickel-comprising steel, and similar materials, wherein the uppermost layer of at least 0.5 µm, preferably between 1 to 40 µm, most commonly of approximately 10 µm of the treated material is characterized by consistent and uniform nanostructured particles smaller than 5 nm, which are interconnected into rounded and elongated shapes at the micro-scale morphology of the nanostructured film. The increase in electrochemically active surface area (ECSA), which can be determined through double-layer capacitance (C_{dl}) measurements, is at least 5-fold. The electrocatalysts are uniform across the entire laser-treated surface, ensuring consistent electrochemical properties throughout the material.

The selected starting material can be prepared using any metal or alloy preparation process. The starting material can have any size and/or shape or form, including sheets, wires, and meshes.

The nanostructured surfaces of materials created by this invention have broad applicability, including use in the development of electrocatalysts. However, electrocatalysts so prepared can also be used in other applications or products, such as fuel cells, lithium-ion batteries, wastewater treatment, and active components in sensors, hence the electrocatalysts prepared according to the invention find use in different advanced applications.

### Brief description of the drawings

The invention will be described in further detail based on examples and figures, which show:
- Figure 1: SEM micrograph of the top surface of laser-treated metallic Fe (example 1)
- Figure 2: SEM micrograph of the top surface of the laser-treated FeCoNiCrMn Cantor alloy (example 2)
- Figure 3: SEM micrograph of the top surface of laser-treated Ni super alloy (Ni 58% min. Cr 20-23% Fe 5% max. Mo 8-10%, also known as Inconel 625) (example 3)
- Figure 4: OER performance of untreated and laser-treated Ni super alloy (figure A) and HER performance of untreated and laser-treated Ni super alloy (figure B) (example 3)
- Figure 5: OER performance of untreated and laser-treated FeCoNiCrMn Cantor alloy (figure A) and HER performance of untreated and laser-treated FeCoNiCrMn Cantor alloy (figure B) (example 2)
- Figure 6: Linear fit of current change versus scan rate for the untreated Ni super alloy (Ni 58% min. Cr 20-23% Fe 5% max. Mo 8-10%), used to extract double-layer capacitance (C_{dl}) (figure A) and linear fit of current change versus scan rate for the laser-treated Ni super alloy, used to extract C_{dl} (figure B) (example 3)

### Detailed description of the invention

The method for preparation of electrocatalysts according to a possible embodiment is applied to materials selected in the group comprising medium entropy alloys, high entropy alloys including but not limited to Cantor alloys, particularly high entropy alloys comprising transition metals, Nickel, Nickel-comprising alloys, steel, and Nickel-comprising steel.

The method according to the invention consists of a single step, involving the laser modification of the starting material under conditions that result in a uniform morphology, which is consistent across the entire treated surface of the material. The change in morphology is achieved in the upper layer of the treated material with a thickness of ranging from at least 0.5 µm, usually from approximately 1 µm to 40 µm, most commonly approximately 10 µm.

A fiber laser with a wavelength between 1000 and 1100 nm, preferably 1064 nm with laser parameters selected within the following ranges is used to treat the selected starting material:
- relative applied power to the treated surface is selected in the range from 5 W to 100 W, preferably from 10 W to 50 W, with an optimal range from 20 W to 30 W,
- laser frequency is selected in the range from 500 Hz to 120 kHz, preferably below 50 kHz,
- scan speed is selected in the range from 10 mm/s to 3000 mm/s, with an optimal range between 200 mm/s and 800 mm/s,
- laser beam diameter below 100 µm, and
- line spacing is selected in the range from 0.001 mm to 0.1 mm, preferably between 0.005 mm and 0.015 mm.

Additionally, the method can be conducted in any atmosphere, such as nitrogen, oxygen, argon, hydrogen, carbon dioxide, vacuum, or ammonia, to tailor the surface composition of the treated starting material.

### Examples

Three different materials were used for performing the method according to a possible embodiment defined above. The conditions were the same for all three materials. In this embodiment of the method, a 20 W fiber laser (1064 nm) operating at 20 kHz was employed to treat the surface of the alloy. The laser was set to 80% power output, which means that the relative applied power was 16 W. The scan speed was 500 mm/s and a line spacing of 0.01 mm. The process was conducted in an inert argon atmosphere.

The change in material surface morphology serves as the primary descriptor, wherein the treated surfaces were inspected with scanning electron microscopy. Particle sizes were measured during microscopy protocols.

OER and HER measurements were performed for examples 2 and 3, wherein the protocol disclosed in Suhadolnik et al. (2024; doi: 10.1016/j.mtchem.2023.101835) was used, with only one adaptation for activation. Namely, in the present samples, activation was performed with 50 cycles between 0.1 V and 1.2 V at a scan rate of 20 mV/s.

The effectiveness of the laser modification was for example 3 also analyzed by measuring the electrochemically active surface area (ECSA), which was determined through double-layer capacitance (C_{dl}) measurement. Said measurements were performed according to the procedure described by Serapinien 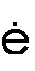 et al. (2023; https://www.mdpi.com/2079-6412/13/8/1335).

### Example 1

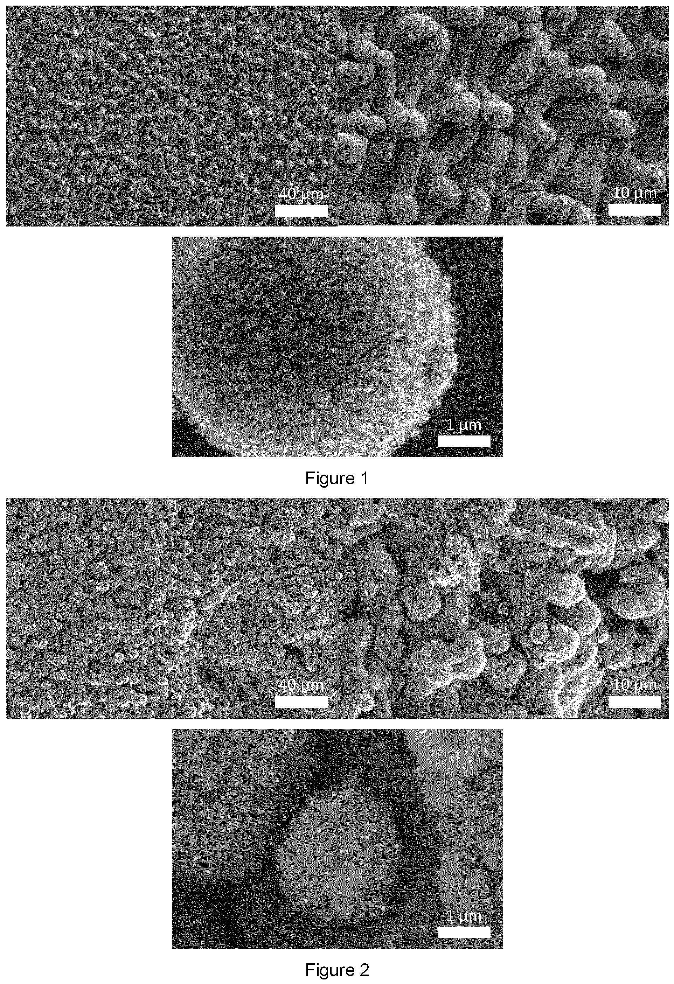

The embodiment of the invention demonstrates the results of laser modification of metallic Fe under the conditions defined above. The surface of treated metallic Fe is shown in figure 1, which shows a SEM micrograph at three different magnifications, all showcasing the unique morphology and composition changes achieved through the described process. The homogeneous nanostructured film with a high specific surface area exhibits nanostructured particles smaller than 5 nm, which are interconnected into rounded and elongated shapes at the micro-scale. These morphological changes increase the specific surface area, which is of utmost importance for electrocatalytic applications.

### Example 2

The embodiment of the invention demonstrates the results of laser modification of Cantor alloy under the conditions defined above. The surface of the treated Cantor alloy is shown in figure 2, which shows a SEM micrograph at three different magnifications, all showcasing the unique morphology and composition changes achieved through the described process. The homogeneous nanostructured film with a high specific surface area exhibits nanostructured particles smaller than 5 nm, which are interconnected into rounded and elongated shapes at the micro-scale. These morphological changes increase the specific surface area, which is of utmost importance for electrocatalytic applications. The observed effect of laser treatment is similar as that observed for metallic Fe.

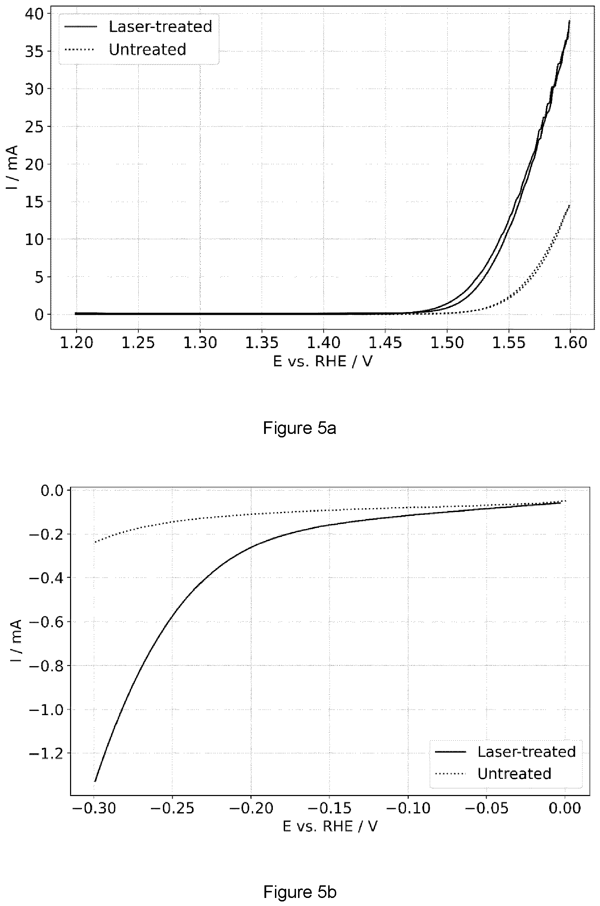

Furthermore, figure 5a and figure 5b show the oxygen evolution reaction (OER) and hydrogen evolution reaction (HER) performance of untreated and laser-treated Cantor alloy, respectively. These measurements indicate that laser treatment reduces the overpotential for both reactions, demonstrating a significant improvement in catalytic activity.

### Example 3

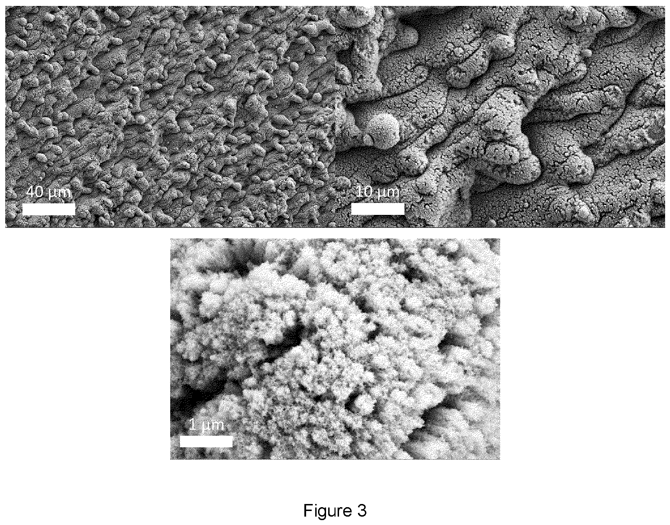

The embodiment of the invention demonstrates the results of laser modification of Ni superalloy (Inconel 625) under the conditions defined above. The surface of treated Ni superalloy is shown in figure 3, which shows a SEM micrograph at three different magnifications, all showcasing the unique morphology and composition changes achieved through the described process. The homogeneous nanostructured film with a high specific surface area exhibits nanostructured particles smaller than 5 nm, which are interconnected into rounded and elongated shapes at the micro-scale. Moreover, the modification is uniform across the entire laser-treated surface, ensuring high electrocatalytic activity of the entire material. These morphological changes increase the specific surface area, which is of utmost importance for electrocatalytic materials. The observed effect of laser treatment is similar as observed in previous examples confirming the wide applicability of the method to different alloys.

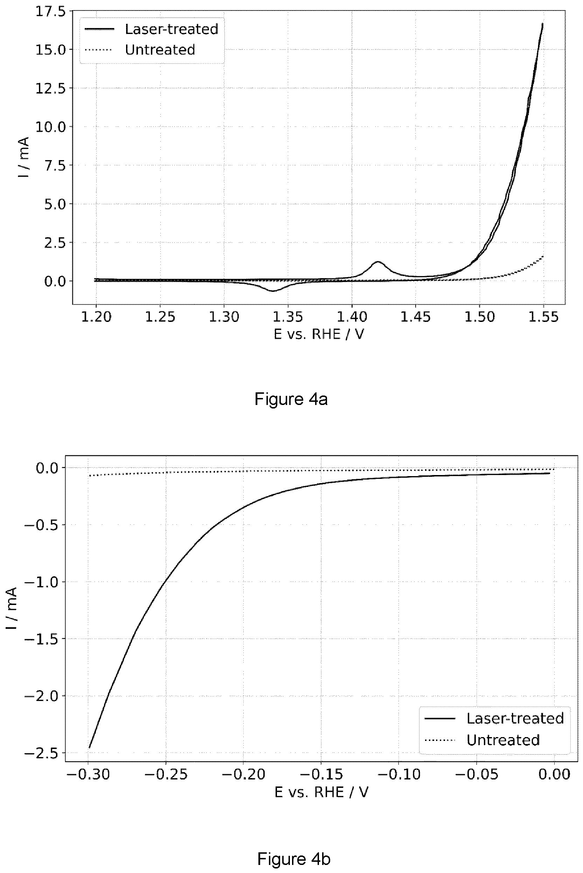

Furthermore, figure 4a and figure 4b show the oxygen evolution reaction (OER) and hydrogen evolution reaction (HER) performance of untreated and laser-treated Ni superalloy, respectively. These measurements indicate that laser treatment reduces the overpotential for both reactions, significantly enhancing the electrochemical activity of the entire material.

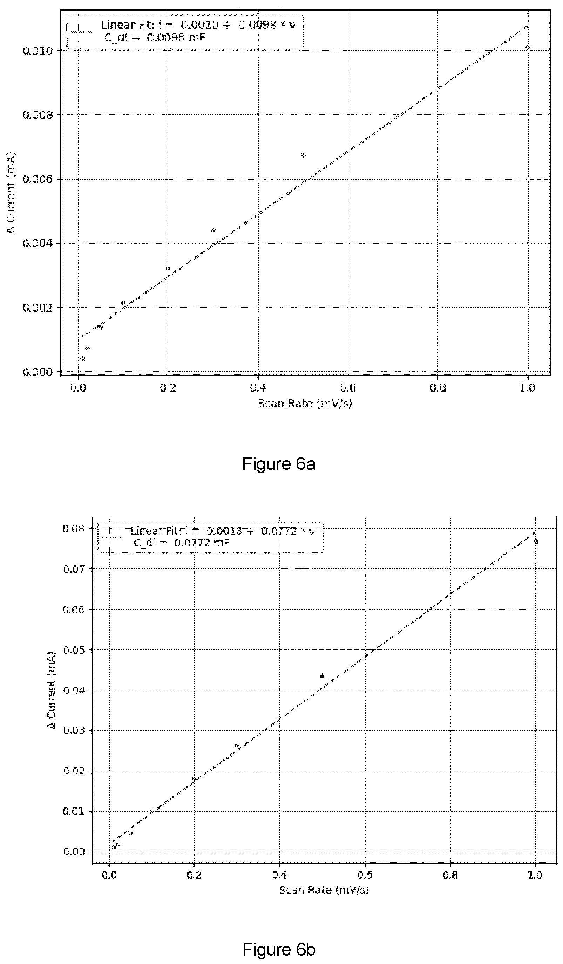

The effectiveness of the laser modification was demonstrated by the increase in electrochemically active surface area (ECSA), determined through double-layer capacitance (C_{dl}) measurements. Figure 6 shows the linear fit of current response data (slope calculation) for untreated and laser-treated surfaces, which clearly demonstrates the change in C_{dl} before and after laser treatment. Specifically, for Ni superalloy (Inconel 625), the C_{dl} value increased from 0.0098 mF for the unmodified material to 0.0772 mF after laser processing, representing a 7.88-fold increase. This significant enhancement confirms the substantial increase in active surface area.

For all three examples, the laser treatment under described conditions led to changes in the uppermost layer of the material with a thickness up to 20 µm. Namely, in the upper nanostructured layer with thickness from 1 to 5 µm significant nanostructuring was observed, while in the lower layer to about 10 to 20 µm a remelted layer has been observed.

## Claims

1. A method for preparation of electrocatalysts, wherein the method comprises laser treatment of starting materials selected in the group comprising medium entropy alloys, high entropy alloys, Cantor alloys, high entropy alloys comprising transition metals, nickel, nickel-comprising alloys, steel, nickel-comprising steel, and similar materials, resulting in a uniform immobilized nanostructured layer with a thickness of at least 2µm and exhibiting at least 5-fold increase in electrochemically active surface area (ECSA), wherein any laser with a wavelength between 1000 and 1100 nm and the following laser parameters is used:
- relative applied power to the treated surface is selected in the range from 5 W to 100 W,
- laser frequency is selected in the range from 500 Hz to 80 kHz,
- scan speed is selected in the range from 10 mm/s to 3000 mm/s,
- pulse width is between 1 and 100 ns,
- laser beam diameter below 100 µm, and
- line spacing is selected in the range from 0.001 mm to 0.1 mm.

2. The method according to claim 1, wherein the relative applied power to the treated surface is selected in the range from 10 W to 50 W.

3. The method according to claim 2, wherein the relative applied power to the treated surface is selected in the range from 20 W to 30 W.

4. The method according to any of the preceding claims, wherein the laser frequency is below 30 kHz.

5. The method according to any of the preceding claims, wherein the scan speed is selected in the range from 200 mm/s to 800 mm/s.

6. The method according to any of the preceding claims, wherein line spacing is selected in the range from 0.005 mm to 0.015 mm.

7. The method according to any of the preceding claims, wherein the laser power is set based on the relative applied power, wherein the laser power ranges from 10 W to 1000 W, wherein the user sets the suitable % of the power to be applied.

8. The method according to any of the preceding claims, wherein the laser is a 1064 nm laser.

9. The method according to any of the preceding claims, wherein the laser is a fiber laser.

10. The method according to any of the preceding claims, wherein the method is conducted in an atmosphere selected in the group of following atmospheres: nitrogen, oxygen, argon, hydrogen, carbon dioxide, vacuum, and ammonia.

11. The method according to any of the preceding claims, wherein the starting material is in the form of sheets, wires, and meshes.

12. An electrocatalyst prepared with the method according to any of the preceding claims, wherein said electrocatalysts are prepared from a starting material selected in the group comprising medium entropy alloys, high entropy alloys, Cantor alloys, high entropy alloys comprising transition metals, nickel, nickel-comprising alloys, steel, nickel-comprising steel, and similar materials, exhibiting a uniform immobilized nanostructured layer with thickness of at least 0.5 µm and at least 5-fold increase in electrochemically active surface area (ECSA).

13. The electrocatalyst according to the preceding claim, wherein the uppermost layer with thickness between 0.5 to 40 µm, most commonly of approximately 10 µm of the treated material, is **characterized by** consistent and uniform nanostructured particles smaller than 5 nm, which are interconnected into rounded and elongated shapes at the micro-scale morphology of the nanostructured film.

14. Use of the electrocatalyst according to any claim from 12 to 13 in electrocatalysis, fuel cells, lithium-ion batteries, wastewater treatment, and/or active components in sensors.
